# EUROPEAN PATENT APPLICATION

(11) **EP 4 617 988 A1**
(43) Date of publication of application: **17.09.2025**
(21) Application number: 24162576.3
(22) Date of filing: 11.03.2024
(51) Int. Cl.: G06Q 30/0251, G06Q 50/12, G06Q 20/32, H04W 4/80

(54) **INFORMATION DISTRIBUTION DEVICE IN SHAPE OF PASTRY**

(71) Applicant: 800.IA, 75016 Paris (FR)
(72) Inventor: Oumina, Hanane-Ezzahra, 75016 Paris (FR)

(57) **Abstract**

An information distribution device including a device assembly and an electronic assembly. The device assembly includes a housing which has pastry shape. Said housing is volumetrically suitable to be placed in life environment and to enclose the electronic assembly, said housing includes fixture to be fixed on surfaces. The electronic assembly includes a transceiver unit, a processing unit and a near field communication unit. The information distribution device is capable of being wirelessly connected to a remote server and receive information and instructions and send information to said remote server. The information distribution device is capable of wirelessly communicating with an electronic user device to permit a user to receive information through near field communication.

## Description

### BACKGROUND

### 1. Field of the invention

The present disclosure relates to information distribution device, and more particularly to information distribution device in shape of pastry.

### 2. Description of related art

Making information available is key for people's communication. In some places, it is crucial to change information served to people based on circumstances, like in fairs, supermarkets, and exhibitions. In many times, it happens that making information available through internet becomes inaccessible because of network failure or network congestion, or simply because putting information in internet like a web page may take time to update and publish. Making information available in proximity devices that could be read by people with their electronic user devices such as smartphones without said electronic user devices having access to internet could alleviate many scenarios of information unavailability. One scenario could be in restaurants, where the menu is changing based on the availability of raw materials during the serving, the client will only see available menu items in instant manner. Another scenario is to make information available in places where network is unstable like underground parking.

Currently there are solutions that allow access to specific information through QR codes as an example. These solutions provide static information that are not often updated if not at all, and user device need to be connected to have information updates in many cases. None of these solutions, however, teach of an information distribution device that is comprised of a pastry shaped that has capability to have information update in real-time manner by connecting to a remote server, and said information is read by unconnected electronic user device.

### SUMMARY OF THE INVENTION

Information distribution device is an electronic device that allows a user to access to a specific information in a specific environment, using their user electronic device with not need to be connected to internet. Said specific information is updated inside said information distribution device though a wireless connection to a remote server.

It is the first aspect of the present invention to provide an information distribution device having shape of pastry that brings familiarity to the device and incites to use it.

It is the second aspect of this invention to provide information distribution device that incorporates wireless technology to connect with a remote server which is the source of information, said information distribution device receives information from the remote server and stores it in a readable local memory that could be read by user electronic device using wireless technology.

It is another aspect of the invention to provide information distribution device that has long life power autonomy.

Further aspects of the invention will be brought out in the following detailed description is for purpose of fully disclosing the invention without placing limitations thereon.

### DETAILED DESCRIPTION

### 1. Brief description of figures

With the above and other related aspects of invention in view, the invention consists in the details of construction and combination of parts as will be more fully understood from the following detailed description, when read in conjunction with the accompanying drawings in which:
Figure 1 represents an embodiment of operational view of the present invention and connection and communication relations with remote sever and electronic user device.
Figure 2 represents an embodiment of the invention use in real life environment.
Figure 3 shows an example of the invention external view having shape of round pastry and fixture apparatus.
Figure 4 is a representation of cross-sectional view showing the electronic assembly inside, such as the processing unit, communication unit, near field communication unit and battery unit.

### 2. Detailed description of the embodiments of the invention

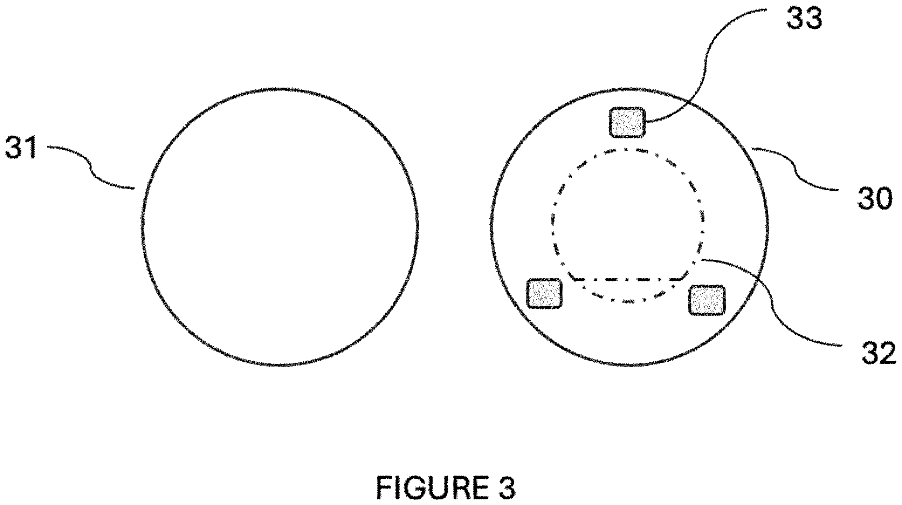

Referring now to the drawings, where the present invention said information distribution device is generally referred to with numeral 10, it basically includes device housing in figure 3 and electronic assembly 40. It should be understood there are modifications and variations of the invention that are too numerous to be listed but that all fit within the scope of the invention. The present invention said information distribution device is generally referred to with numeral 10 has capability of connecting and communicating with remote server through wireless network 11 and communicating with user device through near field communication 15.

Wireless network 11 may include for example cellular network, public land mobile network, satellite network, WiFi Network.

Near Field Communication 15 refers to a set of communication protocols that enable two electronic devices to establish communication by bringing them within proximity of each other. The communication range of near field communication is typically in the order of centimeters (e.g., 10 centimeters or less).

Remote server 13 may include one or more devices capable of receiving, generating storing, processing, providing, and/or routing information associated with the function of sending and receiving information to/from the information distribution device. Said remote server may be connected to wireless network using internet network 12.

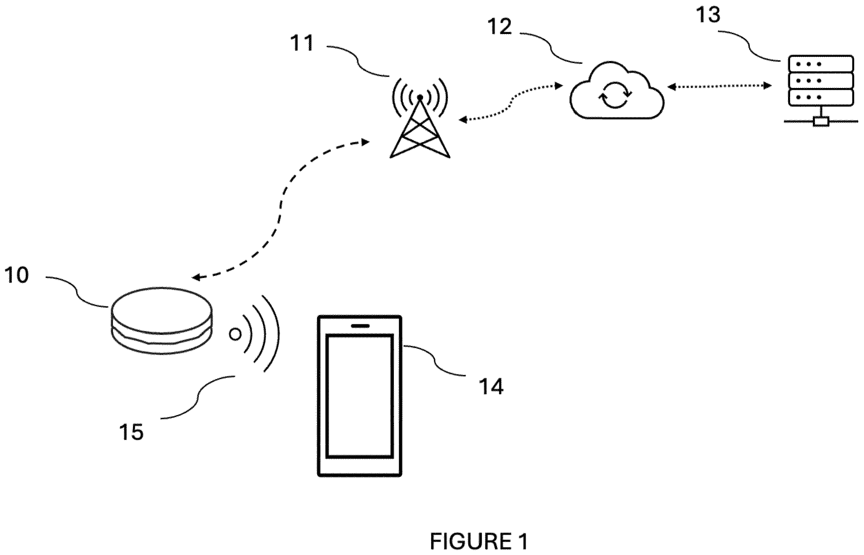

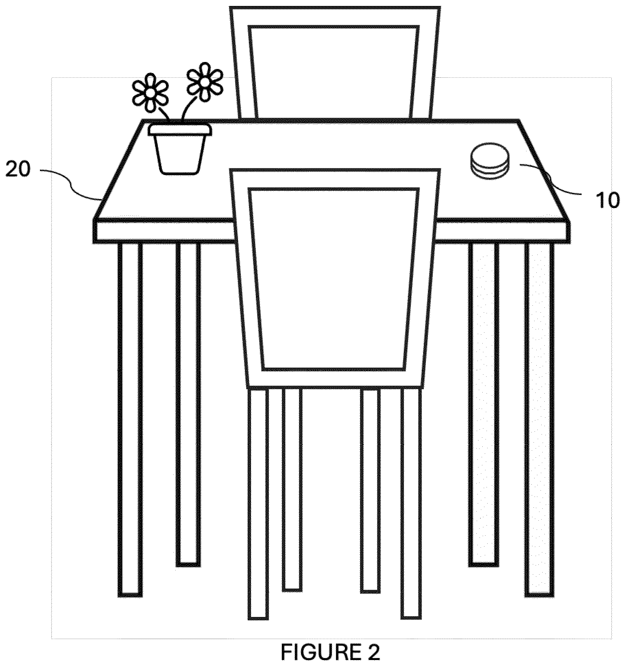

Information distribution device 10 includes the device housing. Said device housing refers to the exterior enclosure used to protect the interior mechanism. Said device housing may be made of a resistant, sturdy, durable material. Said device housing may be volumetrically suitable to enclose the electronic assembly, said device housing protects electronic assembly from dust and humidity, said device housing may be volumetrically suitable to be placed in the environment where it will be used; like in the embodiment illustrated in figure 2, placed in a dining table of a restaurant. Said device housing may be made of acrylic, polycarbonate, polyethylene, polyethylene terephthalate, polyvinyl chloride, acrylonitrile-butadiene-styrene, steel, stainless steel, metal alloys, fibers, ceramics, wood, cloth, foam, or any variation thereof. In a suitable embodiment, housing may have pastry shape, color, and look in a way that is instantly recognized by people. Pastry refers to a finished food product that is made from one or more of cereals, rice, flour, beans, potatoes, oils, sugar, as main common ingredients, and is supplemented with various auxiliary materials, fillings, and seasonings like cream, eggs, cocoa, jam, etc., other ingredients are often added to the surface of the product or inside after cooking before or after cooking. After being processed into a certain shape, it is cooked by baking, roasting, steaming, frying, etc., examples of pastries are macaron, doughnut, kaabelghazal. Another example of pastry explained in the figure 1 is a round pastry in a form of a cookie. In other embodiments of said information distribution device, housing may have an animal shape, a plant shape, a geometrical shape, or any variation thereof. Said device housing may include fixture 33 that allows to fix the said information distribution device in the environment of usage. The fixture 33, allows said information distribution device to be fixed on different types and geometrical forms of surfaces and in different positions horizontal or vertical surfaces and inclinations in between. Based on the target surface where information distribution device will be fixed, said fixture could be natural adhesive or synthetic adhesive, it could be solvent-based, or polymer like polyvinyl acetate based, Ethylene-vinyl acetate-based or a like, or any variation of thereof. The fixture 33 may have the capability to be removable with specific tools and methods.

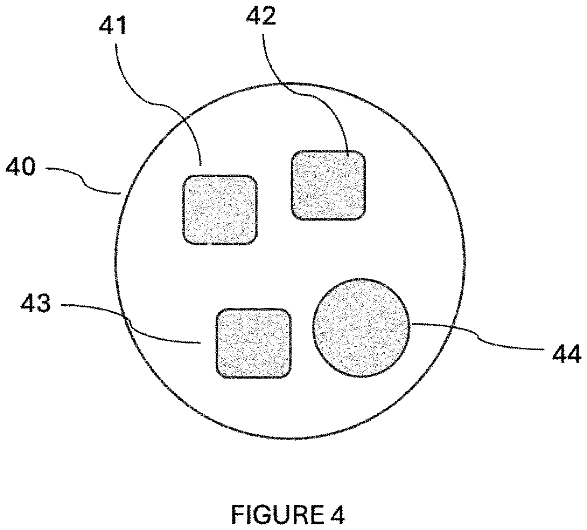

The electronic assembly 40 as illustrated in figure 4, includes communication unit 41, processing unit 42, near filed communication unit 43 and battery unit 44.

Communication unit 41 may allow wireless connection between the information distribution device 10 and wireless network 11. Communication unit 41 may send and receive a signal having format of an electromagnetic radiation. Communication unit 41 may use wireless technology such as ultrasonic technology, infrared technology, RF technology, Wi-FiTM technology, BluetoothTM technology, or any variation thereof. In one or more embodiments, the further communication unit is at least one of a satellite communication unit, a wireless local area network communication unit, a Bluetooth communication unit, a cellular communication unit, and an ultra-wideband communication unit.

Processing unit 42 may comprise one or more microcontroller and one or more memory. Processing unit may allow the control of information distribution device functions. Processing unit 42 may be connected to said communication unit to perform functions of communication with remote sever. Processing unit 42 may have a GPS unit to send the location of said information distribution device to remote server and/or to use this information to execute instructions. Processing unit 42 may be configured to send location information to remote server. Processing unit 42 may comprise a computer program comprising executable instructions which, when executed causes the update of information at least one component of near field communication unit 43. Processing Unit 42 may be configured to send reporting information to remote server.

Near field communication unit 43 may include a controller, a management component a memory and near field communication antenna, said near field communication antenna may include antenna capable of receiving and/or transmitting information using near field communication protocol. Said memory is read using user electronic device 12. Said user electronic device refers to any device used by people such as smartphone tablets, computer, etc.

The battery unit 44 may be connected to the communication unit 41, to the processing unit 42, and near field communication unit 43 to supply electric energy to the elements. The used in said battery unit 44 may be a single-use battery type, however in other embodiments said battery may be rechargeable. The battery could be changed by opening the battery tray door 32 comprised in the device housing.

## Claims

1. an information distribution device, comprising:
a. a device assembly including a device housing, said device housing has a pastry shape, said device housing is fixed to surfaces by means of fixture, said fixture is mounted in the device assembly, and
b. an electronic assembly including a transceiver unit, said transceiver unit is configured to be connected to remote server, said electronic assembly further including a processing unit, said processing unit having a GPS unit to transmit the location, said electronic assembly further including a near field communication unit capable, said near field communication unit includes memory that is read by and electronic user device, said electronic assembly further including battery unit to power the said electronic assembly.

2. The information distribution device of claim 1 wherein said transceiver uses wireless technology.

3. The information distribution device of claim 1, wherein said transceiver unit receives and transmits instructions to said processing unit to execute predetermined tasks.

4. The information distribution device of claim 1 wherein said processing unit executes tasks to update information in near field communication unit memory, so as said information is ready to be read by electronic user device using near field communication protocol.

5. An information distribution device consisting of,
a. a device assembly including a device housing, said device housing has a pastry shape.
b. An electronic assembly including a transceiver unit, a processing unit and near field communication unit and battery unit, said transceiver unit is configured to connect to a remote server which is capable of sending information and instructions to said information distribution device, said transceiver unit uses wireless technology, said transceiver unit receives and transmits instructions and information to said processing unit for the processing unit to execute instructions, said processing unit updates information in memory of near field communication unit to make it available to be read by other electronic user device, said battery unit uses one-single use battery, said battery unit includes a placement for a removable battery, said placement is accessible via a removable door in the said device housing. Said processing unit having a GPS unit to transmit the location.
